(19) Europäisches Patentamt
European Patent Office
Office européen des brevets

(11) **EP 2 550 719 B1**

(12) **EUROPÄISCHE PATENTSCHRIFT**

(45) Veröffentlichungstag und Bekanntmachung des Hinweises auf die Patenterteilung:
**13.08.2014  Patentblatt 2014/33**

(21) Anmeldenummer: **11711828.1**

(22) Anmeldetag: **24.03.2011**

(51) Int Cl.:
*H02J 7/35* *(2006.01)*      *H02J 3/38* *(2006.01)*
*H02J 7/34* *(2006.01)*

(86) Internationale Anmeldenummer:
**PCT/EP2011/054560**

(87) Internationale Veröffentlichungsnummer:
**WO 2011/117361 (29.09.2011 Gazette 2011/39)**

(54) **SOLARWECHSELRICHTER FÜR ERWEITERTEN EINSTRAHLUNGSWERTEBEREICH UND BETRIEBSVERFAHREN**

SOLAR INVERTER FOR AN EXTENDED INSOLATION VALUE RANGE AND OPERATING METHOD

CONVERTISSEUR SOLAIRE POUR PLAGE DE VALEURS D'IRRADIATION ÉLARGIE ET PROCÉDÉ DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.03.2010  DE 102010016138**

(43) Veröffentlichungstag der Anmeldung:
**30.01.2013  Patentblatt 2013/05**

(73) Patentinhaber: **Refusol GmbH**
**72555 Metzingen (DE)**

(72) Erfinder: **HANTSCHEL, Jochen**
**72581 Dettingen (DE)**

(74) Vertreter: **Daub, Thomas**
**Patent- und Rechtsanwaltskanzlei Daub**
**Bahnhofstrasse 5**
**88662 Überlingen (DE)**

(56) Entgegenhaltungen:
**DE-A1- 10 018 943     US-A1- 2010 008 119**

**Beschreibung**

Die vorliegende Erfindung betrifft ein Wechselrichtersystem für eine photovoltaische Solaranlage und ein Betriebsverfahren für dieses und insbesondere einen Solarwechselrichter mit zugehörigem Betriebsverfahren für einen erweiterten Einstrahlungswertebereich.

Wechselrichtersysteme für photovoltaische Solaranlagen, die an einen Solargenerator anzuschließen sind und dazu dienen, aus der Gleichspannung des Solargenerators eine ein- oder mehrphasige Wechselspannung zu erzeugen, sind in unterschiedlichen Konfigurationen bekannt. In einer üblichen Konfiguration weisen sie einen Zwischenkreis, der mit dem Solargenerator zu verbinden ist und einen oder mehrere Kondensatoren zur Energiespeicherung aufweist, gegebenenfalls einen Hochsetzsteller zwischen dem Solargenerator und dem Zwischenkreis, um die Spannung des Solargenerators auf ein erforderliches höheres Niveau einzustellen, sowie einen an dem Zwischenkreis angeschlossenen Wechselrichter auf, dessen Ausgang mit einem Wechselspannungsnetz zur Energieeinspeisung oder mit einem oder mehreren Verbrauchern zur Versorgung verbunden werden kann. Es werden meist elektronische Wechselrichterbauarten mit Halb- oder Vollbrückenschaltungen eingesetzt, die taktbare Halbleiterschaltelemente aufweisen und die von einem Regler und einer Steuervorrichtung geeignet hochfrequent angesteuert werden, um am Ausgang einen Wechselstrom zu erzeugen, der hinsichtlich der Phase und Amplitude bspw. an eine sinusförmige 50 Hz oder 60 Hz Netzspannung angepasst ist. Beispielhafte Konfigurationen von Solarwechselrichtersystemen und zugehörige Betriebsverfahren sind z.B. in DE 102 21 592 A1, DE 100 20 537 A1 und DE 10 2005 024 465 A1 beschrieben.

Solargeneratoren für Photovoltaikanlagen weisen meist mehrere in Reihe und gegebenenfalls zusätzlich parallel verschaltete Solarmodule auf, deren Solarzellen einfallendes Licht der Sonne direkt in elektrische Energie umwandeln. Der Wechselrichter nutzt dann diese Energie, um den für das Netz oder den Verbraucher geeigneten Wechselstrom zu erzeugen. Der Wechselrichter muss äußerst effizient arbeiten, um einen hohen Wirkungsgrad und eine hohe Ausbeute der Photovoltaikanlage erzielen zu können. Diese Faktoren sind angesichts der relativ hohen Investitionskosten für die Anschaffung und den Betrieb einer Photovoltaikanlage von enormer Bedeutung. Moderne Wechselrichtersysteme können im Nennbetrieb Gesamtwirkungsgrade bis zu 98% oder sogar mehr erzielen.

Um eine möglichst hohe Ausbeute zu erhalten, wird der Solargenerator an dem sog. Maximum Power Point (MPP) betrieben, der derjenige Punkt des Strom-Spannungs-Diagramms des Solargenerators ist, an dem die größte Leistung entnommen werden kann, d.h. an dem das Produkt aus Strom und Spannung sein Maximum hat. Der MPP-Betriebspunkt ist nicht konstant, sondern hängt von der Einstrahlungsstärke, der Temperatur und dem Typ der Solarzellen bzw. des Solargenerators ab.

Der MPP-Betriebspunkt wird in einem Solarwechselrichter häufig durch einen sog. MPP-Tracker eingestellt, der die Spannung des Solargenerators auf einen benötigten Wert einregelt. Der MPP-Tracker variiert hierzu z.B. den entnommenen Strom um einen kleinen Betrag, errechnet jeweils das Produkt aus Strom und Spannung und stellt den Stromwert in Richtung höherer Leistung nach. Somit kann auch bei wechselnden Einstrahlungsverhältnissen am Solargenerator stets die richtige Leistungsanpassung vorgenommen werden.

Allerdings werden Wechselrichter üblicherweise nicht für den gesamten Einstrahlungsbereich ausgelegt. So werden Wechselrichter hinsichtlich ihrer Nennleistung häufig etwa 10% unter der Maximalleistung des Solargenerators ausgelegt. Gründe hierfür sind, dass kleinere Wechselrichter deutlich kostengünstiger sind und im Teillastbereich wesentlich höheren Wirkungsgrad aufweisen. Bei den üblichen Einstrahlungswerten in Mitteleuropa ergibt sich aber meist nur ein Teillastbetrieb im Bereich von etwa 10% bis 80% der Solargeneratornennleistung. Insofern werden Wechselrichter herkömmlicherweise nur für eine Einstrahlung im Bereich bis zu etwa 1000 W/m$^2$ ausgelegt.

Es treten jedoch auch Wetterverhältnisse auf, bei denen die Einstrahlungswerte höher sind und der Solargenerator folglich Leistungen liefert, die der herkömmlich dimensionierte Wechselrichter nicht aufnehmen kann. Bspw. können bei kühlen Umgebungstemperaturen und Wolkenkonzentrationen kurzzeitig hohe und auch durch Reflexion an den Wolken weiter begünstigte Einstrahlungswerte bis zu 1400 W/m$^2$ oder mehr beobachtet werden, die maximale Leistungsspitzen des Solargenerators ergeben. Eine Studie von G. Wirth, M. Zehner, B. Giesler: "Sizing and Operational Experience with MWp-PV-Systems - Lessons Learned for System Design Tasks", 2009, schätzt die Energie dieser Strahlungsspitzen im Wertebereich von 1000 bis 1400 W/m$^2$ auf bis zu 8% eines Jahresenergieertrags ein.

Üblicherweise wird bei einem derartigen Strahlungsüberangebot und Erreichen der Leistungsgrenze des Wechselrichters der MPP-Arbeitspunkt in Richtung höherer Spannung verschoben. Weil der unterdimensionierte Wechselrichter das Leistungsüberangebot nicht aufnehmen kann, zwingt er die Arbeitspunkte mit Leistungen, die normalerweise über der Maximalleistung des Wechselrichters liegen würden, auf sein Leistungsmaximum. Damit wird Energie, die der Solargenerator liefern könnte, nicht abgerufen und geht verloren.

Um dies zu vermeiden, empfiehlt die vorgenannte Studie von G. Wirth et al., den Wechselrichter im Verhältnis zum Solargenerator nicht wie üblich unter- sondern überzudimensionieren, z.B. auf 110% Wechselrichterleistung im Verhältnis zu 100% Solargeneratorleistung auszulegen. Dieser Ansatz hat jedoch mehrere Nachteile. Erstens wird, wie bereits oben erwähnt, der Wechselrichter mit steigender Größe deutlich teurer.

Zweitens wird der Teillastwirkungsgrad im Normalbetrieb, z.B. bei 10% Generatornennleistung deutlich schlechter. Schließlich steht oft ein derart aufnahmefähiges Netz oder aufnahmefähiger Verbraucher gar nicht zur Verfügung.

DE 100 18 943 A1 beschreibt eine Photovoltaikanlage, bei der alle für ein Photovoltaikinselsystem erforderlichen Energiequellen und Energiesenken über Wandler ausschließlich an einen Gleichspannungsbus mit frei wählbarem Spannungsniveau angekoppelt sind. Ein Photovoltaikgenerator ist über einen Gleichspannungs-/Gleichspannungs-Anpaßwandler an den Gleichspannungsbus angeschlossen, wobei der Anpaßwandler einen MPP-Tracker enthält, der dessen Arbeitspunkt an den momentanen MPP-Punkt des Photovoltaikgenerators anpasst. An den Gleichspannungsbus sind ferner eine Batterie über einen bidirektionalen Laderegler und ein Inselwechselrichter mit einem Verbraucher angeschlossen. Eine Steuer- und Regeleinrichtung, die für das Energiemanagement vorgesehen ist, sorgt dafür, dass die Batterie bei Energieüberschuss im Gleichspannungsbus geladen und bei Energiedefizit entladen wird.

Aus der US 2010/0008119 A1 ist ein weiteres System bekannt, das ebenfalls einen Gleichspannungsbus vorsieht, an den über einen Gleichspannungs-/Gleichspannungswandler ein Solargenerator, ein Netzwechselrichter und über einen weiteren bidirektionalen Gleichspannungs-/Gleichspannungswandler eine Energiespeichereinrichtung, wie bspw. Batterie, angeschlossen sind, um Energie bedarfsweise dem Gleichspannungsbus zu entnehmen bzw. zuzuführen.

Davon ausgehend ist es eine Aufgabe der vorliegenden Erfindung, ein Solarwechselrichtersystem und ein Betriebsverfahren für dieses zu schaffen, die es ermöglichen, die Nachteile bekannter Wechselrichtersysteme zu überwinden und Leistungsspitzen der Einstrahlung besser zu nutzen. Insbesondere ist es eine Aufgabe der Erfindung, ein für einen erweiterten Einstrahlungswertebereich geeignetes Wechselrichtersystem zu schaffen, ohne die Nachteile einer Wechselrichterüberdimensionierung in Kauf nehmen zu müssen. Vorteilhafterweise sollte der Gesamtwirkungsgrad des Wechselrichters bei wechselhaften Einstrahlungsverhältnissen erhöht werden.

Diese Aufgabe wird mit dem Wechselrichtersystem mit den Merkmalen des Anspruchs 1 und dem Betriebsverfahren nach Anspruch 15 gelöst.

Gemäß einem Aspekt der Erfindung ist ein Wechselrichtersystem für eine photovoltaische Solaranlage zur Erzeugung von Wechselspannung aus einer Gleichspannung eines Solargenerators geschaffen, wobei das Wechselrichtersystem einen Zwischenkreis mit an den Solargenerator ohne Zwischenschaltung eines Gleichspannungs-/Gleichspannungswandlers angeschlossenen Gleichspannungszweigen und wenigstens einem Speichermittel, insbesondere Kondensator, zur Zwischenspeicherung von Energie des Solargenerators und einen Wechselrichter zur Umwandlung einer zwischen den Gleichspannungszweigen anliegenden Zwischenkreis-Gleichspannung in eine wechselrichterausgangsseitige Wechselspannung aufweist, wobei der Wechselrichter an dem Zwischenkreis, insbesondere parallel zu dem wenigstens einen Speichermittel des Zwischenkreises angeschlossen ist. Ferner ist eine zusätzliche, von dem wenigstens einen Speichermittel gesonderte Energiespeichereinrichtung vorgesehen, die zur Aufnahme von Energie von dem Solargenerator bestimmt ist. Die Energiespeichereinrichtung ist in einem wahlweise aktivierbaren Energieübertragungspfad angeordnet, der zwischen den Gleichspannungszweigen angeschlossen ist. Das Wechselrichtersystem weist ferner eine Steuerungseinrichtung zur Überwachung und Steuerung des Betriebs des Wechselrichtersystems auf. Erfindungsgemäß weist die Steuerungseinrichtung eine MPP-Trackereinrichtung, die den Arbeitspunkt des Solargenerators auf einen MPP-Arbeitspunkt einstellt, an dem der Solargenerator die nach den momentanen Einstrahlungsverhältnissen größtmögliche Leistung abgibt, und eine Regeleinrichtung auf, die den Wechselrichter auf eine Spannung der Solargeneratorkennlinie regelt, die dem MPP-Arbeitspunkt mit der momentan größten Leistungsabgabe entspricht, wobei die Steuerungseinrichtung eingerichtet ist, um wenigstens eine Größe, die die momentane Einstrahlungsleistung an dem Solargenerator kennzeichnet, zu erfassen und auszuwerten und für den Fall, dass diese Größe eine vorgebbare Grenzleistung überschreitet, den Energieübertragungspfad zu aktivieren, um eine Übertragung von Energie von dem Solargenerator zu der Energiespeichereinrichtung zu bewirken.

Somit wird ein Solarwechselrichter eingangsseitig an dem Gleichspannungszwischenkreis um eine Zusatzvorrichtung ergänzt, zu der im Wesentlichen die Energiespeichereinrichtung und eine Steuerlogik gehören, wobei die Zusatzvorrichtung in der Lage ist, für einen kurzen Zeitraum einen Anteil der Solargeneratorleistung in die Energiespeichereinrichtung zu übertragen. Damit ist sichergestellt, dass auch im Falle eines kurzzeitigen Strahlungsüberangebots bzw. einer Einstrahlungsspitze und gleichzeitig begrenzter Leistung des Wechselrichters keine Arbeitspunktverschiebung an dem Solargenerator vorgenommen werden muss, so dass der Solargenerator weiterhin an seinem MPP-Betriebspunkt betrieben werden kann, während seine gesamte nutzbare Energie auch im Falle von Einstrahlungsspitzen nicht verloren geht, sondern tatsächlich genutzt wird. Die erfindungsgemäße Zusatzvorrichtung ermöglicht die Nutzung bisher nicht oder nur unter erheblichem Aufwand nutzbarer Strahlungsanteile über der Nenneinstrahlung von bspw. über 1000 W/m$^2$. Dies wird ohne Überdimensionierung des Wechselrichters und sogar vorzugsweise mit einem unterdimensionierten Wechselrichter erreicht.

Vorzugsweise ist das Wechselrichtersystem zur Einspeisung von Energie in ein Wechselspannungsnetz, insbesondere ein öffentliches Versorgungsnetz, bestimmt und eingerichtet. Der Wechselrichter liefert an seinem Ausgang also einen zu der Netzwechselspannung passenden Wechselstrom. Am Ausgang des Wechselrichters kann jedoch auch ein beliebiger Verbraucher angeschlossen werden.

Der Wechselrichter kann prinzipiell von beliebiger Bauart mit oder ohne Transformator geschaffen sein. Vorzugsweise ist er ein transformatorloser Wechselrichter mit einer Wechselrichterbrückenschaltung, bspw. einer Halb- oder Vollbrücke, mit taktbaren Halbleiter-Schaltelementen, die gemäß einem vorgebbaren Muster, insbesondere durch Pulsweitenmodulation, getaktet werden, um die ausgangsseitige Wechselspannung zu erzeugen. Der Wechselrichter kann je nach Bedarf in ein- bis dreiphasiger Konfiguration ausgebildet sein.

Die Energiespeichereinrichtung ist speziell ausgewählt und ausgelegt, um das kurzzeitige Energieüberangebot der Leistungsspitzen der Einstrahlung aufzunehmen. So ist die Energiespeichereinrichtung vorzugsweise in der Lage, für einen kurzen Zeitraum von wenigstens 5 bis 60 Sekunden oder 5 bis 90 Sekunden bis zu etwa 40% oder sogar 50% der Nennleistung des Wechselrichters aufzunehmen. Eine hohe Leistungsaufnahmefähigkeit des Energiespeichers im kurzen Zeitraum ist hier entscheidend, weniger der Wirkungsgrad der Energiespeicherung. Wichtig ist auch eine geringe Selbstentladung, während ein langes Energiespeichervermögen bei der erfindungsgemäßen Energiespeichereinrichtung weniger von Bedeutung ist. Als Speicher eignen sich hier insbesondere als Superkondensatoren bezeichnete elektrophysikalische oder elektrochemische Kondensatoren, die auch unter den Produktnamen Supercap, Boostcap oder Ultracap bekannt sind. Auch Elektrolytkondensatoren können zum Einsatz kommen. Andere Speichertechnologien, wie z.B. Lithium-Ionen-Akkumulatoren oder dgl., können bei zukünftigen technischen Verbesserungen hinsichtlich der Ladeströme gegebenenfalls auch zur Anwendung kommen.

Vorzugsweise ist der Energiespeichereinrichtung ein Spannungswandler oder DC/DC-Steller zugeordnet. Dann kann die Spannung des Solargenerators, unabhängig von seiner Bauart und Auslegung, auf ein für die Nutzung der Energiespeichereinrichtung, insbesondere eines Superkondensators, geeignetes Spannungsniveau umgewandelt, insbesondere herabgesetzt werden. Der Spannungswandler kann auch ein bidirektionaler Hochsetz-Tiefsetzsteller sein, der es im Bedarfsfall auf einfache Weise ermöglicht, Energie von der Energiespeichereinrichtung zu dem Zwischenkreis zu übertragen.

Der Energieübertragungspfad kann wenigstens ein Schaltmittel aufweisen, das von der Steuerungseinrichtung betätigt oder angesteuert werden kann, um den Energieübertragungspfad wahlweise zu aktivieren oder zu deaktivieren. In einer vorteilhaften Ausführungsform ist das wenigstens eine Schaltmittel Teil des bidirektionaler Hochsetz-Tiefsetzstellers und kann angesteuert werden, um Energie sowohl zu der Energiespeichereinrichtung als auch von dieser zu dem Zwischenkreis zu übertragen.

Die erfindungsgemäße Steuerungseinrichtung ist insbesondere dazu vorgesehen, Leistungsspitzen der Einstrahlung zu erfassen und den Betrieb hiervon abhängig zu steuern. In einer vorteilhaften Ausführungsform der Erfindung ist der Steuerungseinrichtung eine Messeinrichtung in Form eines Einstrahlungssensors zugeordnet, der die Einstrahlungsleistung vorzugsweise in unmittelbarer Nähe des Solargenerators direkt erfasst und der Steuerungseinrichtung meldet. Die Steuerungseinrichtung weist eine Vergleichereinrichtung auf, die den momentanen Wert der Einstrahlungsleistung entgegennimmt und mit einem als Grenzwert vorgebbaren Schwellenwert vergleicht, um festzustellen, ob Bedingungen von Einstrahlungsspitzen vorliegen. Wenn sie derartige Bedingungen feststellt, der momentane Wert der Einstrahlungsleistung also größer als der Schwellenwert ist, löst die Steuerungseinrichtung daraufhin eine Energieübertragung zu der Energiespeichereinrichtung aus.

Der Schwellenwert ist ein vorgebbarer Einstellungsreferenzwert, der vorzugsweise im Bereich von etwa 900 bis etwa 1100 W/m$^2$ liegt. 1000 W/m$^2$ entspricht dem Einstrahlungswert, der bei Laborbedingungen unter 25°C Zelltemperatur, 90° Einstrahlungswinkel und weiteren Bedingungen zur Angabe der Spitzen- bzw. Nennleistung eines Solarmoduls bzw. -generators standardmäßig verwendet wird. Der Schwellenwert kann jedoch auch in Abhängigkeit von der Auslegung des Wechselrichters, insbesondere seiner Nennleistung oder Maximalleistung, anders festgelegt werden.

In einer weiteren Ausführungsform der Erfindung ist die erfindungsgemäße Steuerungseinrichtung zur Feststellung von Bedingungen, die Einstrahlungsspitzen kennzeichnen, dazu eingerichtet, eine Vollauslastung des Wechselrichters bei seiner ausgangsseitigen Maximalleistung zu erkennen. Wenn die Steuerungseinrichtung eine derartige Vollauslastung des Wechselrichters erfasst, löst sie daraufhin eine Energieübertragung zu der Energiespeichereinrichtung aus, um den Leistungsanteil des Solargenerators, der über den Grenzwert der Maximalleistung des Wechselrichters hinaus geht, zu nutzen.

In einer praktischen Realisierung weist die Steuerungseinrichtung eine übliche Regelstrecke mit der MPP-Trackereinrichtung, einem Spannungsregler, einer Begrenzungseinrichtung und einem Stromregler auf. Die MPP-Trackereinrichtung gibt eine Sollleistung für den Wechselrichter vor, indem sie den Solargenerator an dem MPP-Betriebspunkt arbeiten lässt. Die Begrenzungseinrichtung begrenzt bedarfsweise die Sollleistung auf einen maximal zulässigen Wert. Die Regler regeln die an den Zwischenkreis angelegte Spannung bzw. den zu erzeugenden Wechselstrom.

Eine einfache und vorteilhafte Möglichkeit zur Erkennung einer Vollauslastung des Wechselrichters, um Einstrahlungsspitzen kennzeichnende Bedingungen zu erfassen, besteht darin festzustellen, wenn die von der MPP-Trackereinrichtung vorgegebene Sollleistung in die Begrenzung läuft. In diesem Fall begrenzt die Begrenzungseinrichtung die Sollleistung auf den maximal zulässigen Wert, und sie meldet diesen Zustand an die Steuerungseinrichtung, woraufhin bspw. die MPP-Trackereinrichtung anehalten wird. Beispielsweise kann, wenn die Steuerung auf einem Mikroprozessor oder dgl. basiert, die Begrenzungseinrichtung ein zugehöriges Leistungsbegrenzungsbit in einem Register oder dgl. setzen. Solange das Leistungsbegrenzungsbit gesetzt ist, bleibt die MPP-Trackereinrichtung angehalten und wird die Energiespeichereinrichtung geladen.

Es können auch andere Messeinrichtungen sowohl auf der Gleichspannungsseite als auch auf der Wechselspannungsseite des Wechselrichters vorgesehen werden, um alternativ oder zusätzlich eine Vollauslastung des Wechselrichters bei seiner Maximalleistung und somit kurzfristige Einstrahlungsspitzen kennzeichnende Bedingungen zu erfassen.

Bevorzugterweise ist die Steuerungseinrichtung ferner dazu eingerichtet, die zu der Energiespeichereinrichtung zu übertragene Leistung vorgeben zu können. Bspw. kann die Steuerungseinrichtung anhand von vorgebbaren Parametern und Ist-Umgebungsverhältnissen des Wechselrichtersystems, wie der Maximalleistung und/oder des Wirkungsgrads des Wechselrichters, der Generatorcharakteristik, gegebenenfalls unter Berücksichtigung des Temperaturkoeffizienten, die Grenzleistung bestimmen, die der Wechselrichter gerade noch einspeisen kann, um daraus die genaue Leistungsmenge zu berechnen, die die Grenzleistung überschreitet und die dann in die Energiespeichereinrichtung eingespeist wird.

Die Steuerungseinrichtung entscheidet auch, wann die Pufferung beendet werden soll. Wenn bspw. die Generatorleistung unter die maximal vom Wechselrichter aufnehmbare Leistung fällt, deaktiviert die Steuerungseinrichtung den Energieübertragungspfad, um keine Energie zur Speicherung von dem Solargenerator zu entnehmen, so dass Energie nur dem Gleichspannungszwischenkreis zugeführt wird. Die Schwelle zum Abschalten der Pufferung kann geringfügig unterhalb der Generatornennleistung liegen.

Mit dem erfindungsgemäßen Wechselrichtersystem kann das Vorhandensein von Einstrahlungsspitzen erkannt und über einen kurzen Zeitraum ein solches Maß an Energie aus dem Generatoranschluss in der Energiespeichereinrichtung gepuffert werden, dass über die Einstrahlungsspitze hinweg der Betriebspunkt maximaler Leistung (MPP-Punkt) des Solargenerators gehalten werden kann und der Wechselrichter mit Nenn- oder Maximalleistung betrieben wird. Damit wird die gesamte Energie des Solargenerators ausnahmslos genutzt. Der Gesamtwirkungsgrad des Wechselrichters bei wechselhaften Einstrahlungsverhältnissen kann deutlich erhöht werden. Erreicht wird dies mit relativ einfachen und kostengünstigen Mitteln. Bei der auf einem Einstrahlungssensor beruhenden Ausführungsform kann die Zusatzvorrichtung, die den Einstrahlungssensor, die Schalteinrichtung, eventuelle Mittel zur Spannungsanpassung, den Energiespeicher und die Steuerungskomponente zur Steuerung der Energiespeicherung umfasst, als eigenständige, autarke Vorrichtung geschaffen werden, die auch bei existierenden Wechselrichtersystemen einfach nachgerüstet werden könnte. Alternativ oder zusätzlich kann eine die Vollauslastung des Wechselrichters erkennende Logik auch in einen Wechselrichter an sich, in dessen Steuerungseinrichtung, integriert werden, so dass der Wechselrichter als solcher entscheidet, wann und wie viel Leistung gepuffert wird. Ein Einstrahlungssensor ist dann nicht erforderlich, was den Aufwand weiter reduziert. Allerdings ist dieser zur Erkennung kurzzeitiger Einstrahlungsspitzen sehr vorteilhaft.

Vorteilhafterweise kann die in der Energiespeichereinrichtung gepufferte Energie wiedergewonnen und genutzt werden. Hierzu ist die Steuerungseinrichtung eingerichtet, um die Energiespeichereinrichtung wahlweise mit dem Zwischenkreis und/oder einem Verbraucher zu verbinden, um Energie von der Energiespeichereinrichtung zu dem Zwischenkreis und/oder dem Verbraucher übertragen zu können. Bspw. kann bei wieder verringerter Solargeneratorleistung unterhalb seiner Nennleistung die gespeicherte Energie wieder dem Zwischenkreis zugeführt werden, um den Wechselrichter möglichst bei seiner Nennleistung zu betreiben und die gepufferte Energie allmählich ebenfalls ins Netz einzuspeisen. Dies erhöht den Ertrag der Photovoltaikanlage. Alternativ kann die aus dem Energiespeicher gewonnene Energie auch zur Eigenverbrauchsdeckung des Wechselrichters eingesetzt werden, was den mittleren Wirkungsgrad des Wechselrichters und damit auch den Gesamtertrag erhöht. Ferner kann diese Energie auch zur Versorgung von Sekundärverbrauchern (wie z.B. Lüftern, etc.), auch unabhängig von dem Wechselrichter, genutzt werden.

Gemäß einem weiteren Aspekt der Erfindung ist ein Verfahren zum Betreiben eines derartigen Wechselrichtersystems für eine photovoltaische Solaranlage zur Erzeugung von Wechselspannung aus einer Gleichspannung eines Solargenerators geschaffen, wobei das Verfahren die Schritte aufweist, dass eine Energiespeichereinrichtung bereitgestellt wird, die zur Aufnahme von Energie mit dem Solargenerator verbindbar ist, Bedingungen erfasst werden, die für Einstrahlungsverhältnisse an dem Solargenerator kennzeichnend sind, der Arbeitspunkt des Solargenerators auf einen MPP-Arbeitspunkt eingestellt wird, an dem der Solargenerator die nach den momentanen Einstrahlungsverhältnissen größtmögliche Leistung abgibt, der Wechselrichter auf eine Spannung der Solargeneratorkennlinie geregelt wird, die dem MPP-Arbeitspunkt mit der momentan größten Leistungsabgabe entspricht, und für den Fall, dass die erfassten Bedingungen Einstrahlungsspitzen an dem Solargenerator kennzeichnen, die vorgebbare maximal nutzbare Einstrahlungsleistungen überschreiten, eine Übertragung von Energie von dem Solargenerator zu der Energiespeichereinrichtung zur vorübergehenden Speicherung ausgelöst wird, während der Wechselrichter mit seiner Nenn- oder Maximalleistung betrieben wird. Die im Zusammenhang mit dem erfindungsgemäßen Wechselrichtersystem gemachten Ausführungen in Bezug auf vorteilhafte Wirkungen und Ausgestaltungen gelten hier in Bezug auf das erfindungsgemäße Verfahren entsprechend.

Weitere Einzelheiten von vorteilhaften Ausführungsformen der Erfindung ergeben sich aus der Zeichnung, der Beschreibung oder Unteransprüchen. In der Zeichnung sind lediglich zu Veranschaulichungszwecken Ausführungsbeispiele der Erfindung veranschaulicht, die diese in keiner Weise beschränken. Es zeigen:

Fig. 1 eine Prinzipdarstellung einer Ausführungsform eines erfindungsgemäßen Wechselrichtersystems;

Fig. 2 ein Blockschaltbild einer Regeleinheit der Steuerungseinrichtung für das erfindungsgemäße Wechselrichtersystem;

Fig. 3 eine Prinzipdarstellung einer weiteren Ausführungsform eines erfindungsgemäßen Wechselrichtersystems;

Fig. 4 eine Prinzipdarstellung einer weiteren Ausführungsform eines erfindungsgemäßen Wechselrichtersystems; und

Fig. 5 ein Flussdiagramm zur Veranschaulichung eines erfindungsgemäßen Verfahrens zum Betreiben des erfindungsgemäßen Wechselrichtersystems.

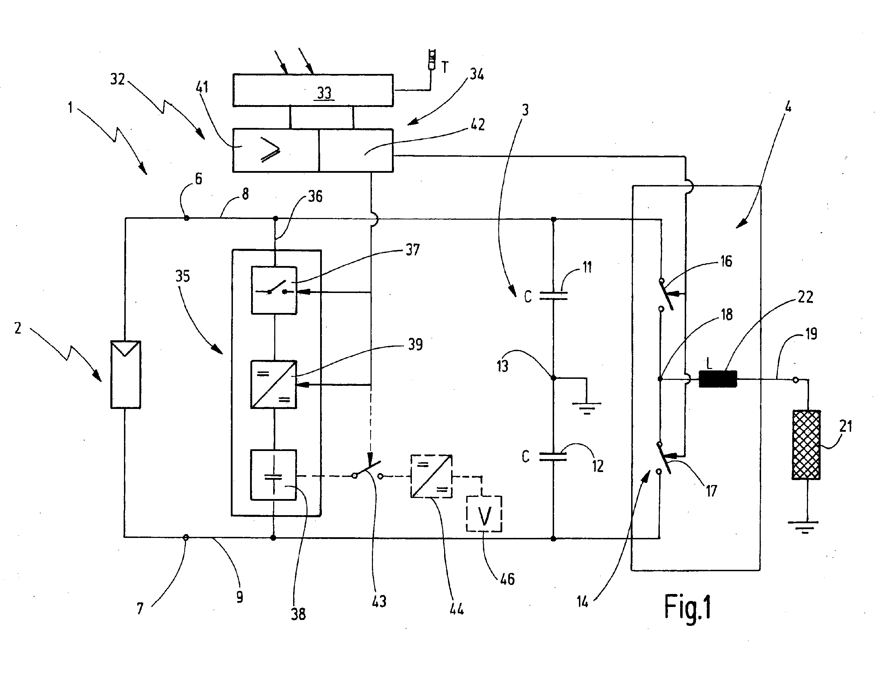

Fig. 1 veranschaulicht ein erfindungsgemäßes Wechselrichtersystem, das für eine photovoltaische Solaranlage zur Erzeugung von Wechselspannung aus einer Gleichspannung vorgesehen ist. Hierzu weist das veranschaulichte Wechselrichtersystem 1 in bekannter Weise einen Solargenerator 2, einen an den Solargenerator 2 angeschlossenen Zwischenkreis 3 und einen an den Zwischenkreis angeschlossenen Wechselrichter 4 auf.

Der Solargenerator ist aus einem oder mehreren Solarmodulen aufgebaut, die einfallendes Licht der Sonne in elektrische Energie umwandeln. Der Solargenerator 2 weist elektrische Anschlüsse auf, die mit einem positiven und negativen Gleichspannungsanschluss 6, 7 des Wechselrichtersystems 1 verbunden sind. Von den Gleichspannungsanschlüssen 6, 7 aus erstrecken sich Gleichspannungszweige 8, 9 zu dem Zwischenkreis 3 und dem Wechselrichter 4 hin.

Der Zwischenkreis 3 ist hier aus zwei Kondensatoren 11, 12 aufgebaut, die in Reihe zueinander zwischen den Gleichspannungszweigen 8, 9 angeschlossen sind. Die Kondensatoren 11, 12 weisen vorzugsweise die gleiche Größe auf, so dass über ihnen jeweils die gleiche Spannung anfällt, die im Wesentlichen der halben Generatorspannung entspricht. Der Verbindungspunkt 13 zwischen den Kondensatoren 11, 12 ist dann vorzugsweise geerdet, wie dies in Fig. 1 veranschaulicht ist. Der Zwischenkreis 3 könnte aber auch nur einen Kondensator oder sogar mehrere Kondensatoren aufweisen, die als Speichermittel zur Speicherung von Energie dienen, die dem Wechselrichter 4 zugeführt wird.

Der Wechselrichter 4 ist dazu vorgesehen, die an dem Zwischenkreis 3 anliegende Gleichspannung in eine ausgangsseitige Wechselspannung umzuwandeln. Der Wechselrichter 4 ist parallel zu den Kondensatoren 11, 12 an die Gleichspannungszweige 8, 9 angeschlossen. Er ist hier in Form einer Halbbrücke 14 mit zwei taktbaren Schaltelementen 16, 17 ausgebildet, die vorzugsweise als Halbleiterschalter in Form von IGBT- oder MOS-FET- oder anderen verlustarmen Schaltern ausgebildet sind, die gemäß einem vorgebbaren Taktmuster mit hohen Frequenzen von bspw. 20 kHz geschaltet werden können. Der Verbindungspunkt zwischen den Schaltelementen 16, 17 bildet den Mittelabgriff 18 der Wechselspannung, also einen wechselspannungsseitigen Ausgang des Wechselrichters 4, der mit einem Wechselspannungszweig 19 verbunden ist. Der Wechselspannungszweig 19 ist bspw. mit einem Wechselspannungsnetz 21 und/oder mit einem oder mehreren Verbrauchern verbunden. Die Wechselspannungs-Ausgangsseite des Wechselrichters weist in dem Wechselspannungszweig 19 eine Speicherdrossel 22 und gegebenenfalls weitere Filterelemente, wie Glättungskondensatoren oder dgl., auf, die hier der Einfachheit wegen weggelassen sind.

Obwohl in Fig. 1 ein Wechselrichter 4 in Halbbrückenbauweise mit Mittelabgriff veranschaulicht ist, stellt dies lediglich eine beispielhafte Anordnung für einen Wechselrichter dar. Der Wechselrichter 4 könnte auch in Vollbrückenbauweise ausgeführt sein. Derartige und andere Wechselrichter sind in der Technik weit verbreitet und deren Aufbau und Funktionsweise sind allgemein bekannt. Ebenso ist hier für Veranschaulichungszwecke nur ein einphasiger Wechselrichter 4 gezeigt, während er bspw. zur Speisung eines Drehstromnetzes auch in einer dreiphasigen Konfiguration ausgeführt sein könnte.

Wenn das Wechselrichtersystem 1 dazu dient, Energie z.B. in ein öffentliches Versorgungsnetz einzuspeisen, liegt zwischen einem hier nicht näher bezeichneten Wechselspannungsanschluss an dem Wechselspannungszweig 19 und einem weiteren Anschluss, der hier mit der Erde verbunden ist, eine Wechselspannung an, die eine Amplitude von etwa $\sqrt{2} \cdot 230V$ und eine Frequenz von 50 oder 60 Hz aufweist. Ferner liegt über jedem der Kondensatoren 11, 12 des Zwischenkreises 3 zwischen dem Gleichspannungszweig 8, 9 und dem Verbindungspunkt 13 jeweils ungefähr die halbe Spannung des Solargenerators 2 an. Im Betrieb steuert eine Steuerungseinrichtung nach einem bestimmten Taktmuster, bspw. auf der Basis der Pulsweitenmodulation, die Schalterelemente des Wechselrichters 4 geeignet an, um ausgehend von der Zwischenkreis-Gleichspannung am Eingang des Wechselrichters 4 an dessen Ausgang einen Wechselstrom zu erzeugen, der mit der Phasenlage und Amplitude der Netzwechselspannung weitgehend übereinstimmt.

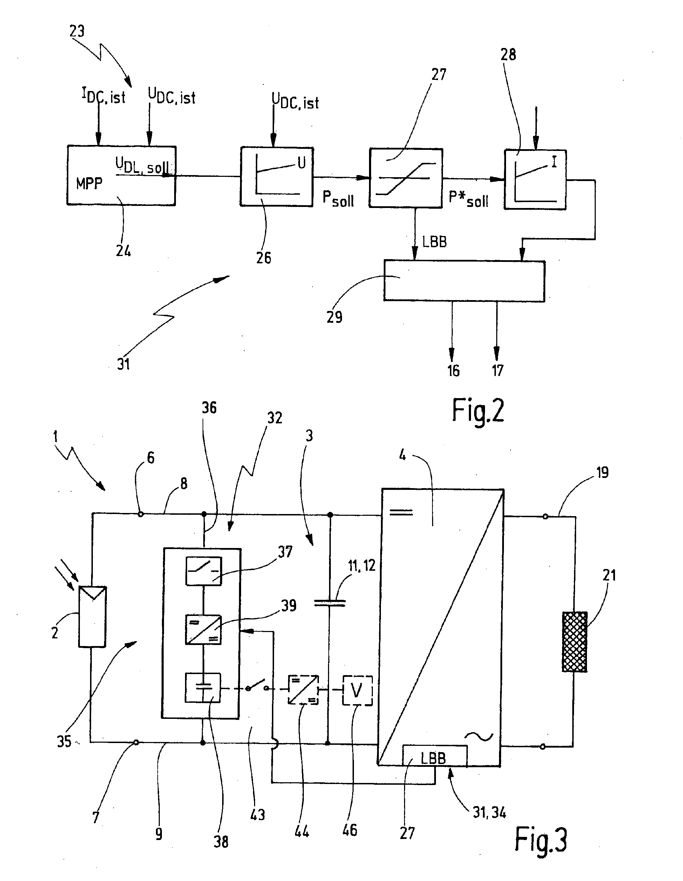

Für einen stabilen Betrieb sollten die durch den Solargenerator 2 gelieferte Eingangsleistung auf der Gleichspannungsseite und die wechselspannungsseitige Ausgangsleistung des Wechselrichters 4, die in das Netz 21 eingespeist wird, ausgeglichen sein. Die verfügbare Gleichspannungsleistung hängt von den Umgebungsbedingungen, wie Einstrahlung, Temperatur und Isolierung und der Solargeneratorspannung ab. Der Wechselrichter sollte stets auf eine Spannung der Solargeneratorkennlinie geregelt werden, die dem Betriebspunkt mit dem momentan größten Leistungsertrag, dem Maximum Power Point (MPP), entspricht. Dies wird mit einer zu der Steuerungseinrichtung des Wechselrichtersystems 1 gehörenden Regeleinrichtung 23 erreicht, wie sie vereinfacht in Fig. 2 dargestellt ist.

Die Regeleinrichtung 23 weist eine MPP-Trackereinrichtung 24 auf, die den Arbeitspunkt des Solargenerators 2 stets leistungsoptimiert derart einstellt, dass der Generator 2 immer die nach den momentanen Einstrahlungsverhältnissen größtmögliche Leistung abgibt. Die MPP-Trackereinrichtung 24 erhält hierzu Istwerte $I_{DC,ist}$, $U_{DC,ist}$ des momentanen Eingangsgleichstroms und der momentanen Eingangsgleichspannung und bestimmt daraus den Sollwert der ausgangsseitigen Wechselleistung $P_{soll}$, die in das Wechselspannungsnetz 21 eingespeist werden soll. Ein Spannungsregler 26 regelt die Eingangsspannung auf den benötigten Wert ein. Der Leistungssollwert $P_{soll}$ wird einer Begrenzungseinrichtung 27 zugeführt, die den Sollwert bedarfsweise auf einen maximalen Wert begrenzt, der dem Maximalwert der Ausgangsleistung des Wechselrichters bei Vollauslastung entspricht. Ein anschließender Wechselstromregler 28 regelt den Wechselstrom auf den benötigten Wert ein, um den Sollwert $P^{*}_{soll}$, wie er am Ausgang der Begrenzungseinrichtung 27 vorgegeben wird, zu erhalten. Eine Ansteuerungseinrichtung 29 verwendet die Informationen von dem Stromregler 28, um Schaltschwellen für die Schaltelemente 16, 17 der Wechselrichter-Halbbrücke 14 zu bestimmen und steuert diese pulsweitenmoduliert an, um den von dem Stromregler vorgegebenen Wechselstrom zu erzielen. Die Regeleinrichtung 23 mit den Komponenten 24 bis 28 und die Ansteuerungseinrichtung 29 bilden gemeinsam eine Steuerungseinrichtung 31, die den gesamten Betrieb des Wechselrichtersystems 1 steuert.

Das erfindungsgemäße Wechselrichtersystem 1 ist insbesondere auch zur Nutzung kurzfristiger Einstrahlungsspitzen bei Photovoltaikanlagen eingerichtet. Durch Wolkenkonzentrationseffekte können für einen kurzen Zeitraum von wenigen Sekunden bis zu etwa einer oder wenigen Minuten Leistungsspitzen der Einstrahlung auftreten, die über die Nenneinstrahlungsleistung von 1000 W/m$^2$, für die Photovoltaikanlagen im Allgemeinen ausgelegt sind, hinausgehen. Das erfindungsgemäße Wechselrichtersystem 1 ist eingerichtet, um die Einstrahlungsspitzen zu nutzen, ohne den Wechselrichter 4 überzudimensionieren und die damit verbundenen Nachteile in Kauf nehmen zu müssen, so dass der Gesamtwirkungsgrad des Wechselrichters bei wechselhaften Einstrahlungsverhältnissen deutlich erhöht werden kann.

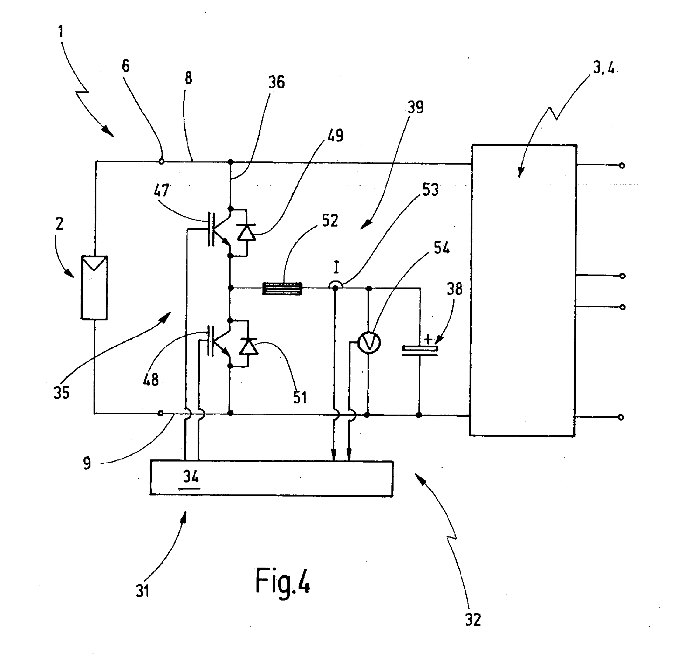

Um dies zu bewerkstelligen, ist in der in Fig. 1 veranschaulichten Ausführungsform des Wechselrichtersystems 1 eine Zusatzvorrichtung 32 zur Nutzung der Energie von Einstrahlungsspitzen vorgesehen. Die Zusatzvorrichtung 32 weist eine Messeinrichtung 33, die die momentane Sonneneinstrahlung und gegebenenfalls auch die Umgebungs- oder Modultemperatur T des Solargenerators 2 erfasst, eine Steuerungskomponente 34 und eine Speicherkomponente 35 auf. Die den Einstrahlungssensor aufweisende Messeinrichtung 33 ist vorzugsweise unmittelbar an dem Solargenerator angeordnet, kann aber auch an einer entfernten Referenzstelle angeordnet sein. Die Speicherkomponente 35 ist in einem aktivierbaren Energieübertragungspfad 36 parallel zu dem Solargenerator 2 zwischen den Gleichspannungszweigen 6, 7 auf der Eingangsgleichspannungsseite des Wechselrichters 4 angeordnet. Die Speicherkomponente 35 weist hier ein Schaltmittel 37, eine Energiespeichereinrichtung 38 und einen hier zwischen dem Schaltmittel 37 und der Energiespeichereinrichtung 38 angeordneten, optionalen Spannungswandler 39 auf. Das Schaltmittel 37 kann von der Steuerungskomponente 34 wahlweise betätigt bzw. angesteuert werden, um den Energieübertragungspfad 36 zur Speicherung von Energie in dem Energiespeicher 38 zu aktivieren. Bspw. könnte das Schaltmittel 37 den Eingang des Spannungswandlers 39 bzw. des Energiespeichers 38 mit dem positiven Gleichspannungszweig 8 verbinden. Der andere Anschluss des Energiespeichers 38 ist mit dem negativen Gleichspannungszweig 9 verbunden. Das Schaltmittel kann auch Teil des Spannungswandlers sein, wie dies im Zusammenhang mit Fig. 4, nachstehend erläutert ist.

Der Spannungswandler 39, auch DC/DC-Steller genannt, wandelt bedarfsweise das an dem Gleichspannungszweig 8 anliegende Spannungspotential auf ein für den Energiespeicher 38 geeignetes Spannungsniveau um. Im Allgemeinen wird die Spannung des Solargenerators 2 durch den als Tiefsetzsteller fungierenden Spannungswandler 39 auf ein geringeres Niveau herabgesetzt, das der Energiespeicher 38 beim Laden ertragen kann.

Der Energiespeicher 38 ist hier ein Speichermittel, das in der Lage ist, innerhalb kurzer Zeit, von bspw. 5 bis 60 Sekunden, etwa 0-30% oder sogar 0-50% der Nennleistung des Wechselrichters 4 aufzunehmen. Hierzu eignen sich insbesondere elektrische Doppelschicht-Kondensatoren, die auch als Superkondensatoren oder Supercaps bzw. Ultracaps bezeichnet werden.

Sie können schnell aufgeladen werden und weisen eine hohe Kapazität auf.

Die Steuerungskomponente 34 weist eine Auswerteeinheit 41 und eine Steuereinheit 42 auf. Die Auswerteeinheit 41 ist dazu eingerichtet, die momentan gemessenen Einstrahlungsleistungswerte auszuwerten, um Bedingungen, die eine kurzfristige Einstrahlungsspitze kennzeichnen, zu detektieren. Im einfachsten Fall kann die Auswerteeinheit 41 einen Vergleicher enthalten, der den momentanen Wert der Einstrahlungsleistung mit einem vorgegebenen Schwellenwert, z.B. dem Nennleistungswert von 1000 W/m$^2$, vergleicht und bei Überschreiten des Schwellenwertes feststellt, dass eine Einstrahlungsspitze vorliegt. Die Steuereinheit 42 aktiviert daraufhin den Energieübertragungspfad 36, um die gewünschte Leistungsmenge zu dem Energiespeicher 38 zu übertragen.

Somit erkennt die erfindungsgemäße Zusatzvorrichtung 32 das Auftreten einer Einstrahlungsspitze und veranlasst, dass über den kurzen Zeitraum der Einstrahlungsspitze ein solches Maß an Energie aus dem Generatoranschluss 6 in den Energiespeicher 38 übertragen und dort gepuffert wird, dass auch über die Einstrahlungsspitze hinweg der MPP-Betriebspunkt des Solargenerators 2 aufrechterhalten werden kann. Die herkömmliche Vorgehensweise bei einem Strahlungsüberangebot, beim Erreichen der Leistungsgrenze des Wechselrichters den MPP-Betriebspunkt in Richtung höherer Spannung zu verschieben, wodurch Energie, die der Solargenerator liefern könnte, nicht abgerufen wird, sondern verlorengeht, kann somit vermieden werden. Ebenfalls kann eine Überdimensionierung des Wechselrichters 4 im Vergleich zu dem Solargenerator 2 gemeinsam mit den damit verbundenen Kostensteigerungen und Verschlechterungen des Teillastwirkungsgrades vermieden werden.

Die Steuerungseinrichtung 34 erkennt auch, wenn die Leistungsspitze der Einstrahlung aufhört. Bspw. erkennt die Vergleichereinrichtung 41 den Zeitpunkt, wenn die momentane Einstrahlungsleistung wieder kleiner als die vorgebbare Schwellenleistung wird. In diesem Falle deaktiviert die Steuereinheit 42 wieder den Energieübertragungspfad 36, um die Übertragung von Energie in den Energiespeicher 38 zu beenden.

Aus dem Energiespeicher 38 kann die gewonnene Energie bedarfsweise entnommen und zur Arbeitsverrichtung genutzt werden. Wie Fig. 1 hierzu strichpunktiert veranschaulicht, kann der Energiespeicher 38 über einen Schalter 43 und bspw. einen Spannungswandler 44 mit einem Verbraucher 46, wie beispielsweise einem Lüfter des Wechselrichtersystems 1 oder auch einem von dem Wechselrichtersystem gesonderten Verbraucher, verbunden sein, um diesen bedarfsweise zu speisen. Die Energie kann auch für den Eigenverbrauch des Wechselrichters 4 genutzt werden, um den mittleren Wirkungsgrad des Wechselrichters und damit den Gesamtertrag zu steigern. Alternativ kann die gewonnene Energie bei verringerter Leistung des Solargenerators unterhalb der Nennleistung wieder dem Gleichspannungs-Zwischenkreis 3 zugeführt und allmählich ebenfalls ins Netz eingespeist werden, wodurch der Ertrag der Solaranlage ebenfalls gesteigert wird. Letzteres kann besonders einfach bewerkstelligt werden, wenn der Spannungswandler 39 der Zusatzvorrichtung 32 ein bidirektionaler Tiefsetz-/Hochsetzsteller ist, der einen Energietransfer in beide Richtungen, so auch von dem Energiespeicher 38 zu dem Gleichspannungszweig 8 hin, ermöglicht.

Die Zusatzvorrichtung 32, wie sie in Fig. 1 veranschaulicht ist, kann als eine separate externe Komponente aufgebaut sein, die parallel zu einem bestehenden Wechselrichtersystem an die Gleichspannungsanschlüsse 6, 7 des Solargenerators 2 angeschlossen werden kann. Sie kann aber auch in einen Wechselrichter 4 eines Wechselrichtersystems integriert werden. Unabhängig vom Integrationsgrad, kann die Steuerungskomponente 34, die beim Auftreten von Einstrahlungsspitzen für den erweiterten Betriebsmodus mit Energiespeicherung in dem Energiespeicher 38 sorgt, als ein Teil der Gesamtsteuerung 31 zur Steuerung des Betriebs des Wechselrichtersystems 1 angesehen werden.

Figuren 3 und 4 zeigen modifizierte Ausführungsformen der Erfindung. Soweit Übereinstimmungen mit dem vorstehend beschriebenen Wechselrichtersystem nach Fig. 1 und 2 im Bau und/oder Funktion bestehen, wird unter Zugrundelegung gleicher Bezugszeichen auf die vorstehende Beschreibung verwiesen.

Fig. 3 veranschaulicht eine weitere Ausführungsform eines Wechselrichtersystems 1, in dem die Zusatzvorrichtung 32 zur Nutzung von Einstrahlungsspitzen in dem Wechselrichtersystem 1 integriert ist. Im Unterschied zu der Ausführungsform nach Fig. 1 ist hier kein Sensor zur Erfassung der Einstrahlungsleistung vorgesehen. Stattdessen wird das Vorliegen von Einstrahlungsspitzen anhand der Vollauslastung des Wechselrichters 4 festgestellt. Wie in Fig. 3 veranschaulicht, erkennt die Steuerungseinrichtung 31 die Vollauslastung des Wechselrichters 4 bei seiner wechselstromseitigen Maximalleistung und aktiviert daraufhin den Energieübertragungspfad 36 und bewirkt dadurch die Übertragung von Energie zu dem Energiespeicher 38. Hierzu kann bspw., wie auch in Fig. 2 veranschaulicht, die Begrenzungseinrichtung 27 ein Leistungsbegrenzungsbit LBB setzen, wenn der Sollwert der Leistung P$_{soll}$ in die Begrenzung läuft, wodurch der Ansteuerungseinrichtung 29 der Steuerung 31 die Vollauslastung des Wechselrichters 4 signalisiert wird.

Solange das Leistungsbegrenzungsbit LBB gesetzt ist, wird der Energiespeicher 38 geladen, während der MPP-Betriebspunkt des Solargenerators 2 durch die MPP-Trackereinrichtung 24 gehalten und der Wechselrichter 4 bei seiner Maximalleistung betrieben wird.. Sobald der Sollwert P$_{soll}$ nicht mehr durch die Begrenzungseinrichtung 27 begrenzt wird, wird das Leistungsbegrenzungsbit LBB wieder zurückgesetzt und die Pufferung von Energie beendet. Das Vorliegen der Vollauslastung des Wechselrichters 4 kann auch anders an die Ansteuerungseinrichtung 29 gemeldet werden.

Jedenfalls ermöglicht die in Fig. 3 veranschaulichte Ausführungsform die Schaffung einer kompakten, in den Wechselrichter integrierten Zusatzvorrichtung, die ebenfalls die Nutzung bisher nicht oder nur unter erheblichem Aufwand nutzbarer Strahlungsanteile über der Nenneinstrahlung von bspw. 1000 W/m$^2$ ermöglicht. Es wird angenommen, dass mit der Erfindung der Eigenverbrauch von Wechselrichtern an wechselhaften Tagen zu einem großen Teil gedeckt werden könnte. Der Wirkungsgrad des Wechselrichters wird dadurch gesteigert. Die Erträge einer Solaranlage fallen damit deutlich höher aus.

Fig. 4 veranschaulicht eine weiter modifizierte Ausführungsform der Erfindung mit einer besonders vorteilhaften Ausgestaltung der Speicherkomponente 35 bzw. des Energieübertragungspfads 36. Es ist zu beachten, dass, obwohl hier auf eine weitere Ausführungsform Bezug genommen wird, die Ausgestaltung des Energieübertragungspfads 36 und der Speicherkomponente 35 nach Fig. 4 vorteilhafterweise auch bei den vorstehend erläuterten Ausführungsformen nach Fig. 1 und 3 verwendet werden kann.

In der Ausführungsform nach Fig. 4 ist das Schaltmittel zur Aktivierung des Energieübertragungspfads 36 Teil des DC/DC-Stellers 39. Der DC/DC-Steller 39 ist hier ein bidirektionaler Hochsetz-/Tiefsetzsteller, der zwei zwischen den Gleichspannungszweigen 8, 9 in Reihe zueinander angeschlossene Halbleiterschalter 47, 48 aufweist, zu denen jeweils eine Freilaufdiode 49, 51 antiparallel geschaltet ist. Parallel zu dem in Fig. 4 unteren Schalter 48, zwischen dem Verbindungspunkt der Schalter 47, 48 und dem negativen Gleichspannungszweig 9 ist eine Reihenschaltung aus einer Speicherdrossel 52 und einem Kondensator, insbesondere Superkondensator oder dgl., der den Energiespeicher 38 bildet, angeschlossen.

Wenn im Betrieb eine Einstrahlungsspitze auftritt, was entweder mittels eines hier nicht näher veranschaulichten Einstrahlungssensors oder anhand der Vollauslastung des Wechselrichters 4 detektiert wird, aktiviert die Steuerungskomponente 34 der erfindungsgemäßen Zusatzvorrichtung 32 den Energieübertragungspfad 36 durch Takten des in Fig. 4 oberen Schalters 47 des DC/DC-Stellers 39. Der untere Schalter 48 ist geöffnet. Beim Schließen des Schalters 47, fließt ein Strom von dem Solargeneratoranschluss 6 über den Schalter 47, die Speicherdrossel 52 zu dem Kondensator 38 und lädt diesen auf. Beim geöffneten Schalter 47 fließt der Freilaufstrom dann über die Freilaufdiode 51 des unteren Schalters 48. Durch die Wahl eines geeigneten Taktverhältnisses wird die gewünschte Leistungsmenge zu dem Kondensator 38 übertragen. Diese Leistungsmenge kann durch Messen des Ladestroms zu dem Kondensator 38 mittels einer Strommesseinrichtung 53 und der über dem Kondensator anfallenden Spannung mittels einer Spannungsmesseinrichtung 54 überwacht werden.

Die Ausführungsform nach Fig. 4 ermöglicht es auch, im Bedarfsfall auf besonders einfache Weise Energie aus dem Energiespeicher 38 zu dem Wechselrichter 4 zurückzuspeisen. Dies kann in Ergänzung zu dem Solargenerator 2 oder alternativ dazu erfolgen. Jedenfalls taktet hierzu die Steuerungskomponente 34 den unteren Schalter 48 mit entsprechender Frequenz bzw. entsprechendem Taktmuster in Abhängigkeit von der gewünschten zu übertragenden Leistungsmenge geeignet an, während der obere Schalter 47 geöffnet ist. Im Schließzustand des Schalters 48 fließt ein Strom durch die Drossel 52 und den Schalter 48 zurück zu dem Kondensator 38, währen im Offenzustand des Schalters 48 der Freilaufstrom über die Freilaufdiode 49 des oberen Schalters 47 zu dem Gleichspannungszweig 8 und weiter zu dem hier in dem Wechselrichter 4 integriert angenommenen Zwischenkreis 3 abfließt. Vorteilhafterweise kann nahezu die gesamte gespeicherte Energie des Energiespeichers 38 genutzt werden, weil der Kondensator 38 annähernd bis zur Nullspannung entladen werden kann.

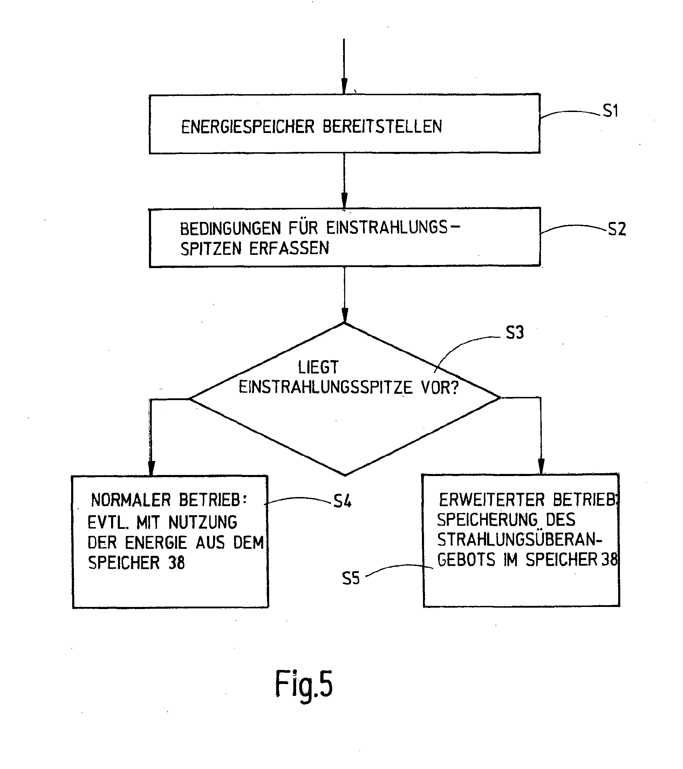

Fig. 5 veranschaulicht ein erfindungsgemäßes Verfahren zum Betreiben eines Wechselrichtersystems für eine photovoltaische Solaranlage, wie bspw., jedoch nicht ausschließlich des Wechselrichtersystems 1 nach Fig. 1 bis 4, zur Erzeugung von Wechselspannung aus einer Gleichspannung eines Solargenerators. In Schritt S1 wird zusätzlich zu dem wenigstens einen Speichermittel in dem Gleichspannungs-Zwischenkreis eine weitere Energiespeichereinrichtung, z.B. 38, bereitgestellt und mit dem Solargenerator 2 zur Aufnahme von Energie verbunden.

In Schritt S2 werden Bedingungen erfasst, die für die Einstrahlungsverhältnisse an dem Solargenerator 2 kennzeichnend sind. Bspw. wird hierzu mit der Messeinrichtung 33 die Einstrahlungsleistung direkt an dem Solargenerator gemessen. Alternativ kann hierzu der von der MPP-Trackereinrichtung 24 vorgegebene Leistungssollwert P$_{soll}$ überwacht werden. Es können auch andere Messeinrichtungen bzw. -verfahren sowohl auf der Wechselspannungsseite als auch auf der Gleichspannungsseite des Wechselrichters 4 in Erwägung gezogen werden, um Bedingungen für Einstrahlungsspitzen an dem Solargenerator, die vorgebbare maximale Einstrahlungsleistungen oder Wechselrichter-Ausgangsleistungen überschreiten, zu erfassen.

In Schritt S3 wird überprüft, ob die erfassten Bedingungen für Einstrahlungsspitzen an dem Solargenerator kennzeichnend sind. Hierzu kann der erfasste momentane Wert der Einstrahlungsleistung mit einem im Voraus vorgebbaren Leistungsreferenzwert, z.B. 1000 W/m$^2$, verglichen werden um festzustellen, ob der momentane Einstrahlungsleistungswert den Leistungsreferenzwert übersteigt. Oder es kann überprüft werden, ob die Leistungsgrenze des Wechselrichters erreicht ist.

Falls in Schritt S3 die erfassten Bedingungen anzeigen, dass keine Einstrahlungsspitzen an dem Solargenerator vorliegen, wird in Schritt S4 der normale Betrieb des Wechselrichtersystems 1 fortgesetzt oder bewirkt.

Andernfalls, wenn Einstrahlungsspitzen kennzeichnende Bedingungen erfasst werden, wird in Schritt S5 ein erweiterter Betriebsmodus ausgelöst, in dem eine Übertragung von Energie von dem Solargenerator 2 zu dem Energiespeicher 38 veranlasst wird. Die Steuerung 31 bestimmt hierzu anhand des momentanen Einstrahlungsleistungswertes und des vorgegebenen, vorzugsweise parametrierbaren Leistungsreferenzwertes oder anhand des Leistungssollwerts und des vorzugsweise parametrierbaren Maximalwertes der Ausgangsleistung des Wechselrichter 4 die Grenzleistung, die der Wechselrichter gerade noch bspw. in das Wechselspannungsnetz 21 einspeisen kann. Daraus bestimmt die Steuerung 31 ferner die Leistungsmenge, die diese Grenzleistung überschreitet und die somit in dem Energiespeicher 38 gepuffert werden soll. Daraufhin steuert die Steuerung 31 die Energieübertragung zu dem Energiespeicher 38, um diese zuvor bestimmte Leistungsmenge zu übertragen. Überwacht kann die übertragene Leistungsmenge bspw. in der in Fig. 4 veranschaulichten Weise.

Die Schritte S2 bis S4 bzw. S5 werden während des Betriebs des Wechselrichtersystems ständig wiederholt.

Sobald die Solargeneratorleistung unter die Generatornennleistung fällt, kann die Steuerung 31 bewirken, dass Energie aus dem Energiespeicher 38 wieder zurück in den Gleichspannungs-Zwischenkreis abgegeben wird. Damit kann der Wechselrichter 4 weiterhin bei der Nennleistung betrieben werden, was den Ertrag der Solaranlage steigert. Alternativ kann Energie aus dem Energiespeicher 38 auch zur Deckung des Eigenverbrauchs des Wechselrichters 4 und/oder zur Versorgung von Sekundärverbrauchern verwendet werden.

Es ist ein Wechselrichtersystem 1 für eine photovoltaische Solaranlage zur Erzeugung von Wechselspannung aus einer Gleichspannung eines Solargenerators 2 geschaffen, das einen zusätzlichen Energiespeicher 38 aufweist, der in einem an den Solargenerator angeschlossenen, bedarfsweise aktivierbaren Energieübertragungspfad 36 angeordnet ist. Eine Steuerungseinrichtung 31, 34 zur Überwachung und Steuerung des Betriebs des Wechselrichtersystems 1 ist dazu eingerichtet, kurzzeitige Leistungsspitzen der Einstrahlung an dem Solargenerator zu erfassen und bei Vorliegen von Einstrahlungsspitzen den Energieübertragungspfad 36 zu aktivieren, um eine Übertragung von Energie von dem Solargenerator 2 zu dem Energiespeicher 38 zu bewirken. Dadurch kann das Strahlungsüberangebot während der kurzzeitigen Einstrahlungsspitzen vorübergehend gepuffert und später zur Eigenverbrauchsdeckung des Wechselrichters 4 oder zur Speisung von Sekundärverbrauchern genutzt werden, was den Wirkungsgrad oder Ertrag der Solaranlage erhöht. Es ist auch ein Verfahren zum Betreiben eines Wechselrichtersystems für eine photovoltaische Solaranlage, um Einstrahlungsspitzen an einem Solargenerator zu nutzen, offenbart.

**Patentansprüche**

1. Wechselrichtersystem für eine photovoltaische Solaranlage zur Erzeugung von Wechselspannung aus einer Gleichspannung eines Solargenerators (2) mit einem Zwischenkreis (3), der an den Solargenerator (2) angeschlossene Gleichspannungszweige (8, 9) ohne Zwischenschaltung eines Gleichspannungs-/Gleichspannungswandlers und wenigstens ein zwischen den Gleichspannungszweigen (8, 9) angeordnetes Speichermittel (11, 12) zur Zwischenspeicherung von Energie des Solargenerators (2) aufweist,
   mit einem an dem Zwischenkreis (3) angeschlossenen Wechselrichter (4) zur Umwandlung einer zwischen den Gleichspannungszweigen (8, 9) anliegenden Zwischenkreis-Gleichspannung in eine wechselrichterausgangsseitige Wechselspannung,
   mit einem wahlweise aktivierbaren Energieübertragungspfad (36), der zwischen den Gleichspannungszweigen (8, 9) angeschlossen ist,
   mit einer Energiespeichereinrichtung (38), die zur Aufnahme von Energie in dem Energieübertragungspfad (36) angeordnet ist, und
   mit einer Steuerungseinrichtung (31) zur Überwachung und Steuerung des Betriebs des Wechselrichtersystems (1), wobei die Steuerungseinrichtung (31) eine MPP-Trackereinrichtung (24), die den Arbeitspunkt des Solargenerators (2) auf einen MPP-Arbeitspunkt einstellt, an dem der Solargenerator (2) die nach den momentanen Einstrahlungsverhältnissen größtmögliche Leistung abgibt, und eine Regeleinrichtung (23) aufweist, die den Wechselrichter (4) auf eine Spannung der Solargeneratorkennlinie regelt, die dem MPP-Arbeitspunkt mit der momentan größten Leistungsabgabe entspricht, und wobei die Steuerungseinrichtung (31) eingerichtet ist, um wenigstens eine Größe, die die momentane Einstrahlungsleistung an dem Solargenerator (2) kennzeichnet, zu erfassen und auszuwerten und für den Fall, dass diese Größe eine vorgebbare Grenzleistung überschreitet, den Energieübertragungspfad (36) zu aktivieren, um eine Übertragung von Energie von dem Solargenerator (2) zu der Energiespeichereinrichtung (38) zu bewirken.

2. Wechselrichtersystem nach Anspruch 1, **dadurch gekennzeichnet, dass** es zur ein- oder mehrphasigen Einspeisung von Energie in ein Wechselspannungsnetz, insbesondere ein öffentliches Versorgungsnetz, bestimmt ist.

3. Wechselrichtersystem nach Anspruch 1, **dadurch gekennzeichnet, dass** der Wechselrichter (4) ein transformatorloser Wechselrichter mit in einer Brückenschaltung angeordneten taktbaren Halbleiter-Schaltelementen (16, 17) ist.

4. Wechselrichtersystem nach Anspruch 1, **dadurch gekennzeichnet, dass** die Energiespeichereinrichtung (38) eingerichtet ist, um für einen kurzen Zeitraum von 5 bis 90 Sekunden bis zu 50% der Nennleistung des Wechselrichters (4) aufzunehmen.

5. Wechselrichtersystem nach Anspruch 4, **dadurch gekennzeichnet, dass** die Energiespeichereinrichtung (38) wenigstens einen Superkondensator aufweist.

6. Wechselrichtersystem nach Anspruch 1, **dadurch gekennzeichnet, dass** der Energiespeichereinrichtung (38) ein Spannungswandler (39) zugeordnet ist, der die Spannung des Solargenerators (2) auf ein für die Nutzung der Energiespeichereinrichtung (38) passendes Spannungsniveau wandelt.

7. Wechselrichtersystem nach Anspruch 1, **dadurch gekennzeichnet, dass** der Energieübertragungspfad (36) ein Schaltmittel (37; 47, 48) aufweist, das von der Steuerungseinrichtung (31, 34) betätigt oder angesteuert werden kann, um den Energieübertragungspfad (36) wahlweise zu aktivieren oder zu deaktivieren.

8. Wechselrichtersystem nach Anspruch 1, **dadurch gekennzeichnet, dass** der Steuerungseinrichtung (31) eine Messeinrichtung (33) zugeordnet ist, die die momentane Einstrahlungsleistung erfasst und hierfür kennzeichnende Werte an die Steuerungseinrichtung (31) liefert, und dass die Steuerungseinrichtung (31) eine Vergleichereinrichtung (41) aufweist, die den momentanen Wert der Einstrahlungsleistung mit einem als Grenzwert vorgebbaren Schwellenwert vergleicht um festzustellen, ob Bedingungen für Einstrahlungsspitzen vorliegen, und daraufhin eine Energieübertragung zu der Energiespeichereinrichtung (38) auszulösen.

9. Wechselrichtersystem nach Anspruch 8, **dadurch gekennzeichnet, dass** der Schwellenwert ein Einstrahlungsreferenzwert im Bereich von etwa 900 bis etwa 1100 W/m$^2$ ist.

10. Wechselrichtersystem nach Anspruch 8, **dadurch gekennzeichnet, dass** der Grenzwert von der Nennleistung oder der Maximalleistung des Wechselrichters (4) abhängig ist.

11. Wechselrichtersystem nach Anspruch 1, **dadurch gekennzeichnet, dass** die Steuerungseinrichtung (31) eingerichtet ist, um eine Vollauslastung des Wechselrichters (4) bei seiner ausgangsseitigen Maximalleistung zu erkennen und daraufhin eine Energieübertragung zu der Energiespeichereinrichtung (38) auszulösen.

12. Wechselrichtersystem nach Anspruch 1, **dadurch gekennzeichnet, dass** die Steuerungseinrichtung (31) die MPP-Trackereinrichtung (24), die eine Sollleistung ($P_{Soll}$) für den Wechselrichter vorgibt, und eine Begrenzungseinrichtung (27) zur Begrenzung der Sollleistung auf einen maximal zulässigen Wert ($P^*_{Soll}$) aufweist, und für den Fall, dass der momentane Sollleistungswert größer ist als der maximal zulässige Wert, eine Energieübertragung zu der Energiespeichereinrichtung (38) auslöst.

13. Wechselrichtersystem nach Anspruch 1, **dadurch gekennzeichnet, dass** die Steuerungseinrichtung (31) eingerichtet ist, anhand von Parametern des Wechselrichtersystems und/oder momentanen Umgebungsbedingungen des Wechselrichtersystems (1) die zu puffernde Leistungsmenge zu bestimmen und eine Speicherung von Energie entsprechend der bestimmten Leistungsmenge zu bewirken.

14. Wechselrichtersystem nach Anspruch 1, **dadurch gekennzeichnet, dass** die Steuerungseinrichtung (31) eingerichtet ist, um die Energiespeichereinrichtung (38) wahlweise zu veranlassen, in der Energiespeichereinrichtung (38) gespeicherte Energie zu dem Zwischenkreis (3) bzw. einem Verbraucher (46) zu übertragen.

15. Verfahren zum Betreiben eines Wechselrichtersystems für eine photovoltaische Solaranlage zur Erzeugung von Wechselspannung aus einer Gleichspannung eines Solargenerators (2) mit einem Zwischenkreis (3), der ohne Zwischenschaltung eines Gleichspannungs-/Gleichspannungswandlers an einen Solargenerator angeschlossen ist und wenigstens ein Speichermittel (11, 12) zur Zwischenspeicherung von Energie des Solargenerators (2) aufweist, und mit einem an dem Zwischenkreis (3) angeschlossenen Wechselrichter (4) zur Umwandlung einer Zwischenkreis-Gleichspannung in eine wechselrichterausgangsseitige Wechselspannung, wobei das Verfahren die Schritte aufweist:

  Bereitstellen einer Energiespeichereinrichtung (38), die zur Aufnahme von Energie mit dem Solargenerator (2) verbindbar ist (S1),
  Erfassen von Bedingungen, die für die Einstrahlungsverhältnisse an dem Solargenerator kennzeichnend sind (S2),
  Einstellen des Arbeitspunktes des Solargenerators (2) auf einen MPP-Arbeitspunkt, an dem der Solargenerator (2) die nach den momentanen Einstrahlungsverhältnissen größtmögliche Leistung abgibt,
  Regeln des Wechselrichters (4) auf eine Spannung der Solargeneratorkennlinie, die dem MPP-Arbeitspunkt mit der momentan größten Leistungsabgabe entspricht, und

für den Fall, dass die erfassten Bedingungen Einstrahlungsspitzen an dem Solargenerator kennzeichnen, die eine vorgebbare maximale Einstrahlungsleistung überschreiten (S3), Auslösen einer gesteuerten Übertragung von Energie von dem Solargenerator (2) zu der Energiespeichereinrichtung (38) zur Speicherung (S5), während der Wechselrichter (4) mit seiner Nenn- oder Maximalleistung betrieben wird.

16. Verfahren nach Anspruch 15, **dadurch gekennzeichnet, dass** es ferner die Schritte aufweist:

Erfassen der momentanen Einstrahlungsleistung an dem Solargenerator (2)
Bestimmen der zu der Energiespeichereinrichtung (38) zu übertragenen Leistungsmenge anhand der erfassten momentanen Einstrahlungsleistung und eines im Voraus vorgebbaren Leistungsreferenzwertes und
Steuerung der Energieübertragung zu der Energiespeichereinrichtung entsprechend der bestimmten zu übertragenen Leistungsmenge.

17. Verfahren nach Anspruch 15, **dadurch gekennzeichnet, dass** es ferner die Schritte aufweist:

Bestimmen der momentanen Sollleistung des Wechselrichters,
Bestimmen der Maximalleistung des Wechselrichters,
Vergleichen der momentanen Sollleistung mit der Maximalleistung und für den Fall, dass die momentane Sollleistung größer ist als die Maximalleistung,
Bestimmen der zu der Energiespeichereinrichtung zu übertragenen Leistungsmenge anhand der Sollleistung und der Maximalleistung und
Steuerung der Energieübertragung zu der Energiespeichereinrichtung (38) entsprechend der bestimmten zu übertragenen Leistungsmenge.

18. Verfahren nach Anspruch 15, **dadurch gekennzeichnet, dass** es ferner die Schritte aufweist:

Bestimmen der momentanen Sollleistung des Wechselrichters,
Vergleichen der momentanen Sollleistung mit der Nennleistung des Wechselrichters und für den Fall, dass die momentane Sollleistung kleiner ist als die Nennleistung,
Verbinden der Energiespeichereinrichtung (38) mit dem Zwischenkreis (3) und/oder einem Verbraucher (46) und
Steuerung der Energieübertragung von der Energiespeichereinrichtung (38) zu dem Zwischenkreis (3) und/oder einem Verbraucher (46).

**Claims**

1. Inverter system for a photovoltaic solar installation for generating an AC voltage from a DC voltage of a solar generator (2), having
an intermediate circuit (3) which comprises DC voltage branches (8, 9) which are connected to the solar generator (2) without interconnecting a DC/DC converter, and comprises at least one storage means (11, 12) which is arranged between the DC voltage branches (8, 9) for interim storage of energy of the solar generator (2),
an inverter (4) connected to the intermediate circuit (3) for converting an intermediate circuit DC voltage present between the DC voltage branches (8, 9) to an inverter output side AC voltage,
a selectively activatable energy transfer path (36) connected between the DC voltage branches (8, 9),
an energy storage device (38) arranged in the energy transfer path (36) for receiving energy, and
a control device (31) for monitoring and controlling the operation of the inverter system (1), wherein the control device (31) has an MPP tracker device (24) which adjusts the working point of the solar generator (2) to an MPP working point at which the solar generator (2) outputs the maximum power corresponding to the momentary insolation conditions, and has a regulating device (23) which regulates the inverter (4) to a voltage of the solar generator characteristic corresponding to the MPP working point with the momentarily maximum power output, and wherein the control device (31) is provided to detect and evaluate at least one parameter characterizing the momentary insolation power at the solar generator (2) and, in case said parameter exceeds a predeterminable power limit, to activate the energy transfer path (36) for causing a transfer of energy from the solar generator (2) to the energy storage device (38).

2. Inverter system according to Claim 1, **characterized in that** the inverter system (1) is intended for a one-phase or multi-phase feeding of energy into an AC voltage network, in particular a public supply network.

3. Inverter system according to Claim 1, **characterized in that** the inverter (4) is a transformerless inverter with periodically switchable semiconductor switching elements (16, 17) arranged in a bridge circuit.

4. Inverter system according to Claim 1, **characterized in that** the energy storage device (38) is provided for receiving, for a short period of 5 to 90 seconds, up to 50% of the nominal power output of the inverter (4).

5. Inverter system according to Claim 4, **characterized in that** the energy storage device (38) includes at least one super capacitor.

6. Inverter system according to Claim 1, **characterized in that** a voltage converter (39) is assigned to the energy storage device (38), which voltage converter (39) converts the voltage of the solar generator (2) to a voltage level suitable for using the energy storage device (38).

7. Inverter system according to Claim 1, **characterized in that** the energy transfer path (36) includes a switching means (37; 47, 48) which is activatable or controllable by the control device (31, 34) for selectively activating or deactivating the energy transfer path (36).

8. Inverter system according to Claim 1, **characterized in that** a measuring device (33) is assigned to the control device (31), which measuring device (33) detects the momentary insolation power and supplies corresponding characterizing values to the control device (31), and that the control device (31) has a comparator device (41) which compares the momentary value of the insolation power to a threshold value which is predeterminable as a limit value in order to determine whether insolation peak conditions are present, and, if present, to initiate an energy transfer to the energy storage device (38).

9. Inverter system according to Claim 8, **characterized in that** the threshold value is an insolation reference value in the range of about 900 to about 1100 W/m$^2$.

10. Inverter system according to Claim 8, **characterized in that** the limit value depends on the nominal power output or of the maximum power output of the inverter (4).

11. Inverter system according to Claim 1, **characterized in that** the control device (31) is provided to detect, in an output side maximum power of the inverter (4), a full load of the inverter (4), and to then initiate an energy transfer to the energy storage device (38).

12. Inverter system according to Claim 1, **characterized in that** the control device (31) has the MPP tracker device (24) which predetermines the desired power output (P$_{Soll}$) for the inverter, and has a limiting device (27) for limiting the desired power output to a maximally admissible value (P*$_{Soll}$), and for initiating an energy transfer to the energy storage device (38) if the momentary desired power output value is greater than the maximally admissible value.

13. Inverter system according to Claim 1, **characterized in that** the control device (31) is provided for determining, based on parameters of the inverter system and/or on momentary ambient conditions of the inverter system (1), the quantity of power to be buffered and for bringing about a storing of energy according to the quantity of power determined.

14. Inverter system according to Claim 1, **characterized in that** the control device (31) is provided for selectively causing the energy storage device (38) to transfer energy stored in the energy storage device (38) to the intermediate circuit (3) or to a consumer (46).

15. Method for operating an inverter system for a photovoltaic solar installation for generating an AC voltage from a DC voltage of a solar generator (2), with an intermediate circuit (3) which is connected to a solar generator without interconnecting a DC voltage/DC voltage converter and has at least one storage means (11, 12) for an interim storage of energy of the solar generator (2), and with an inverter (4) connected to the intermediate circuit (3) and provided for converting an intermediate circuit DC voltage into an inverter output side AC voltage, the method having the following steps:

  providing an energy storage device (38) which can be connected to the solar generator (2) for receiving energy (S1),
  detecting conditions which are characteristic for the insolation conditions at the solar generator (S2),
  adjusting the working point of the solar generator (2) to an MPP working point at which the solar generator (2) outputs the, with respect to the momentary insolation conditions, maximum power, regulating the inverter (4) to a voltage of the solar generator characteristic which corresponds to the MPP working point with the momentarily maximum power output, and
  in case the detected conditions characterize insolation peaks at the solar generator which exceed a predeterminable maximum insolation power (S3), initiating a controlled transfer of energy from the solar generator (2) to the energy storage device (38) for storing (S5) while the inverter (4) is operated at its nominal or maximum power output.

16. Method according to Claim 15, **characterized in that** it includes the following additional steps:

  detecting the momentary insolation power level at the solar generator (2)
  determining, on the basis of the detected momentary insolation power and a reference value that is predeterminable in advance, the quantity of power to be transferred to the energy storage device (38), and
  controlling the energy transfer to the energy storage device (38) in accordance with the determined quantity of power to be transferred.

17. Method according to Claim 15, **characterized in that** it includes the following additional steps:

determining the momentary desired power output of the inverter,

determining the maximum power output of the inverter,

comparing the momentary desired power output with the maximum power output and, in case the momentary desired power output exceeds the maximum power output,

determining, on the basis of the desired power output and the maximum power output, the quantity of power to be transferred to the energy storage device and

controlling the energy transfer to the energy storage device (38) in accordance with the determined quantity of power to be transferred.

18. Method according to Claim 15, **characterized in that** it includes the following additional steps:

determining the momentary desired power output of the inverter,

comparing the momentary desired power output to the nominal power output of the inverter and, in case the momentary desired power output is smaller than the nominal power output,

connecting the energy storage device (38) to the intermediate circuit (3) and/or to a consumer (46) and

controlling the energy transfer from the energy storage device (38) to the intermediate circuit (3) and/or to a consumer (46).

**Revendications**

1. Système onduleur pour une installation solaire photovoltaïque destiné à générer une tension alternative à partir d'une tension continue d'un générateur solaire (2)

comprenant un circuit intermédiaire (3) qui présente des branches de tension continue (8, 9) raccordées au générateur solaire (2) sans branchement intermédiaire d'un convertisseur de tension continue en tension continue et au moins un moyen d'accumulation (11, 12) disposé entre les branches de tension continue (8, 9) pour le stockage temporaire de l'énergie du générateur solaire (2),

comprenant un onduleur (4) raccordé au circuit intermédiaire (3) pour convertir une tension continue de circuit intermédiaire appliquée entre les branches de tension continue (8, 9) en une tension alternative côté sortie de l'onduleur,

comprenant un chemin de transmission d'énergie (36) activable au choix, lequel est branché entre les branches de tension continue (8, 9),

comprenant un dispositif d'accumulation d'énergie (38) qui est disposé dans le chemin de transmission d'énergie (36) pour absorber de l'énergie et

comprenant un dispositif de commande (31) pour surveiller et commander l'opération du système onduleur (1), le dispositif de commande (31) présentant un dispositif de poursuite MPP (24), lequel règle le point de fonctionnement du générateur solaire (2) à un point de fonctionnement MPP auquel le générateur solaire (2) dégage la plus grande puissance possible en fonction des conditions d'irradiation momentanées, et présentant un dispositif de régulation (23) qui règle l'onduleur (4) à une tension de la courbe caractéristique du générateur solaire qui correspond au point de fonctionnement MPP avec la puissance produite momentanée maximale, et le dispositif de commande (31) étant conçu pour détecter et dépouiller au moins un paramètre qui caractérise la puissance d'irradiation momentanée sur le générateur solaire (2) et, dans le cas où ce paramètre dépasse à une puissance limite prédéterminé, pour activer le chemin de transmission d'énergie (36) de manière à produire une transmission d'énergie du générateur solaire (2) vers le dispositif d'accumulation d'énergie (38).

2. Système onduleur selon la revendication 1, **caractérisé en ce qu'**il est conçu pour une introduction monophasée ou multiphasée d'énergie dans un réseau de tension alternative, notamment un réseau de distribution public.

3. Système onduleur selon la revendication 1, **caractérisé en ce que** l'onduleur (4) est un onduleur sans transformateur comprenant des éléments de commutation semi-conducteurs (16, 17) synchronisables disposés dans un circuit en pont.

4. Système onduleur selon la revendication 1, **caractérisé en ce que** le dispositif d'accumulation d'énergie (38) est conçu pour absorber jusqu'à 50 % de la puissance nominale de l'onduleur (4) pendant une courte période de 5 à 90 secondes.

5. Système onduleur selon la revendication 4, **caractérisé en ce que** le dispositif d'accumulation d'énergie (38) présente au moins un supercondensateur.

6. Système onduleur selon la revendication 1, **caractérisé en ce qu'**au dispositif d'accumulation d'énergie (38) est associé un convertisseur de tension (39) qui convertit la tension du générateur solaire (2) en un niveau de tension adapté pour l'utilisation du dispositif d'accumulation d'énergie (38).

**7.** Système onduleur selon la revendication 1, **caractérisé en ce que** le chemin de transmission d'énergie (36) présente un moyen de commutation (37 ; 47, 48) qui peut être actionnés ou commandés par le dispositif de commande (31, 34) pour, au choix, activer ou désactiver le chemin de transmission d'énergie (36).

**8.** Système onduleur selon la revendication 1, **caractérisé en ce qu'**au dispositif de commande (31) est associé un dispositif de mesure (33) qui capte la puissance d'irradiation momentanée et délivre dans ce respect des valeurs caractéristiques au dispositif de commande (31), et **en ce que** le dispositif de commande (31) présente un dispositif comparateur (41) qui compare la valeur momentanée de la puissance d'irradiation avec une valeur de seuil qui peut être prédéterminé en tant que valeur limite afin de définir si les conditions pour des pointes d'irradiation sont présentes et, là-dessus, déclencher une transmission d'énergie vers le dispositif d'accumulation d'énergie (38).

**9.** Système onduleur selon la revendication 8, **caractérisé en ce que** la valeur de seuil est une valeur de référence d'irradiation comprise dans la plage d'environ 900 à environ 1100 W/m$^2$.

**10.** Système onduleur selon la revendication 8, **caractérisé en ce que** la valeur limite est dépendante de la puissance nominale ou de la puissance maximale de l'onduleur (4).

**11.** Système onduleur selon la revendication 1, **caractérisé en ce que** le dispositif de commande (31) est conçu pour identifier une situation de pleine charge de l'onduleur (4) en présence de sa puissance maximale du côté de la sortie et, là-dessus, déclencher une transmission d'énergie vers le dispositif d'accumulation d'énergie (38).

**12.** Système onduleur selon la revendication 1, **caractérisé en ce que** le dispositif de commande (31) présente le dispositif de poursuite MPP (24), lequel prédétermine une puissance de consigne ($P_{soll}$) pour l'onduleur, et un dispositif de limitation (27) pour limiter la puissance de consigne à une valeur maximale admissible ($P^*_{soll}$), et dans le cas où la valeur de la puissance de consigne momentanée est supérieure à la valeur maximale admissible, déclenche une transmission d'énergie vers le dispositif d'accumulation d'énergie (38).

**13.** Système onduleur selon la revendication 1, **caractérisé en ce que** le dispositif de commande (31) est conçu pour, au moyen de paramètres du système onduleur et/ou des conditions environnantes momentanées du système onduleur (1), déterminer la quantité de puissance à mettre en tampon et provoquer une accumulation d'énergie conformément à la quantité de puissance déterminée.

**14.** Système onduleur selon la revendication 1, **caractérisé en ce que** le dispositif de commande (31) est conçu pour amener le dispositif d'accumulation d'énergie (38) à transmettre l'énergie accumulée dans le dispositif d'accumulation d'énergie (38) au choix vers le circuit intermédiaire (3) ou un consommateur (46).

**15.** Procédé pour opérer un système onduleur pour une installation solaire photovoltaïque destiné à générer une tension alternative à partir d'une tension continue d'un générateur solaire (2), comprenant un circuit intermédiaire (3) qui est raccordé à un générateur solaire sans branchement intermédiaire d'un convertisseur de tension continue en tension continue et présente au moins un moyen d'accumulation (11, 12) pour le stockage temporaire de l'énergie du générateur solaire (2), et comprenant un onduleur (4) raccordé au circuit intermédiaire (3) pour convertir une tension continue de circuit intermédiaire en une tension alternative côté sortie de l'onduleur, le procédé présentant les étapes suivantes :

mise à disposition d'un dispositif d'accumulation d'énergie (38) qui peut être relié avec le générateur solaire (2) pour absorber de l'énergie (S1),
détection de conditions qui sont caractéristiques pour les conditions d'irradiation sur le générateur solaire (S2),
ajustement du point de fonctionnement du générateur solaire (2) à un point de fonctionnement MPP auquel le générateur solaire (2) dégage la plus grande puissance possible en fonction des conditions d'irradiation momentanées,
régulation de l'onduleur (4) à une tension de la courbe caractéristique du générateur solaire qui correspond au point de fonctionnement MPP avec la puissance produite momentanée maximale, et
dans le cas où les conditions détectées caractérisent des pointes d'irradiation sur le générateur solaire qui dépassent une puissance d'irradiation maximale qui peut être prédéterminé (S3), déclenchement d'une transmission commandée d'énergie du générateur solaire (2) vers le dispositif d'accumulation d'énergie (38) pour accumulation (S5), pendant que l'onduleur (4) est opéré à sa puissance nominale ou maximale.

**16.** Procédé selon la revendication 15, **caractérisé en ce qu'**il présente en outre les étapes suivantes :

détection de la puissance d'irradiation momentanée sur le générateur solaire (2)

détermination de la quantité de puissance à transmettre vers le dispositif d'accumulation d'énergie (38) à l'aide de la puissance d'irradiation momentanée détectée et d'une valeur de référence de puissance qui peut être prédéterminé à l'avance et

commande de la transmission d'énergie vers le dispositif d'accumulation d'énergie conformément à la quantité de puissance à transmettre déterminée.

17. Procédé selon la revendication 15, **caractérisé en ce qu'**il présente en outre les étapes suivantes :

détermination de la puissance de consigne momentanée de l'onduleur,

détermination de la puissance maximale de l'onduleur,

comparaison de la puissance de consigne momentanée avec la puissance maximale et, dans le cas où la puissance de consigne momentanée est supérieure à la puissance maximale,

détermination de la quantité de puissance à transmettre vers le dispositif d'accumulation d'énergie à l'aide de la puissance de consigne et de la puissance maximale, et

commande de la transmission d'énergie vers le dispositif d'accumulation d'énergie (38) conformément à la quantité de puissance à transmettre déterminée.

18. Procédé selon la revendication 15, **caractérisé en ce qu'**il présente en outre les étapes suivantes :

détermination de la puissance de consigne momentanée de l'onduleur,

comparaison de la puissance de consigne momentanée avec la puissance nominale de l'onduleur et, dans le cas où la puissance de consigne momentanée est inférieure à la puissance nominale,

connexion du dispositif d'accumulation d'énergie (38) avec le circuit intermédiaire (3) et/ou avec un consommateur (46) et

commande de la transmission d'énergie du dispositif d'accumulation d'énergie (38) vers le circuit intermédiaire (3) et/ou un consommateur (46).

Fig.1

EP 2 550 719 B1

Fig.2

Fig.3

Fig.4

ENERGIESPEICHER BEREITSTELLEN — S1

BEDINGUNGEN FÜR EINSTRAHLUNGS-
SPITZEN ERFASSEN — S2

LIEGT
EINSTRAHLUNGSSPITZE VOR? — S3

NORMALER BETRIEB:
EVTL. MIT NUTZUNG
DER ENERGIE AUS DEM
SPEICHER 38 — S4

ERWEITERTER BETRIEB:
SPEICHERUNG DES
STRAHLUNGSÜBERAN-
GEBOTS IM SPEICHER 38

S5

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10221592 A1
- DE 10020537 A1
- DE 102005024465 A1
- DE 10018943 A1
- US 20100008119 A1

**In der Beschreibung aufgeführte Nicht-Patentliteratur**

- **G. WIRTH ; M. ZEHNER ; B. GIESLER.** *Sizing and Operational Experience with MWp-PV-Systems - Lessons Learned for System Design Tasks,* 2009